# EUROPEAN PATENT APPLICATION

(11) **EP 0 808 005 A1**
(43) Date of publication of application: **19.11.1997**
(21) Application number: 97201392.4
(22) Date of filing: 14.05.1997
(51) Int. Cl.: H02B 1/20

(54) **Arrangement regarding encased connecting equipment**

(30) Priority: 14.05.1996 SE 9601869
(71) Applicant: Hansson, Marten, 217 57 Malmö (SE); Rydberg, Christer, 234 37 Lomma (SE)
(72) Inventor: Hansson, Marten, 217 57 Malmö (SE); Rydberg, Christer, 234 37 Lomma (SE)
(74) Representative: Petri, Stellan

(57) **Abstract**

A device (S₂) at an encased connecting equipment, which is intended for power current and is to be placed on a floor and at which current is taken from an electricity network via functional units (5') from heavily dimensioned bus-bars (1'), preferably of copper. The functional units (5') are arranged in two horizontal rows in a cubicle belonging to an encased connecting equipment.

## Description

The present invention relates to a device at an encased connecting equipment, which is intended for power current and is to be placed on a floor and at which current is taken from an electricity network via functional units from heavily dimensioned bus-bars, preferably of copper, each representing a phace in a three-phase net. The invention especially relates to functional units with a rated currency of between 100A and 630A.

Each functional unit with connected main bus-bars and conductors between the functional unit and the respective bus-bar emits heat under operation due to the electrical resistance resulting from a power supply from the functional units. The units with overload protectors belonging thereto, such as fuses or MCCB:s (Moulded Case Circuit Breakers), are contained in security cells.

This means that the ability of each respective cell to supply a certain current also is dependent on the surround temperature of the cell. At cubicle connecting equipments up to ten cells are mounted on top of each other for space reasons but probably also tradition, which due to the fact that hot air rises leads to the situation that the functional units arranged highest up in a cubicle have a decreased ability to supply a certain rated current than those arranged further down. This depends on the fact that the thermal protection devices of the respective cells are released because a certain release temperature has been obtained "too early", which in turn depends on the fact that the heat developed within the cell is added to the surrounding heat.

The resulting problem can have great economical consequences for example as a result of cassations in industry depending on repeated and unmotivated operational disruptions.

The purpose of the development, which led to the present invention, has been to reach a solution to the problem that the surround temperature in a cubicle connecting equipment, due to a great extent to the heat development from other cells in a cubicle, contributes to the release of the thermal protection devices of the cells, leading to non motivated operation disruptions.

According to the invention functional units are arranged in two horizontal rows in an encased cubicle connecting equipment.

In a special embodiment with two horizontal rows, the bus-bars of the functional units are arranged between the functional units generally at the same position with regard to the depth in the cubicle, so that the connection between the bus-bars and respective cells can be checked and possibly tightened.

A substantial advantage with the present invention is that the length of the copper bars, which constitute the bus-bars for the supply of cubicle connections, can be minimised, which leads to great positive consequences with regard to the widths of the cubicle connection as well as the manufacturing cost for an installation.

Another advantage with the device according to the invention is that a central arrangement of the main bus-bars of the cubicle connection enables a problem-free supply in and supply from, respectively, the upper part or lower part of the cubicle in an electable way depending on local conditions.

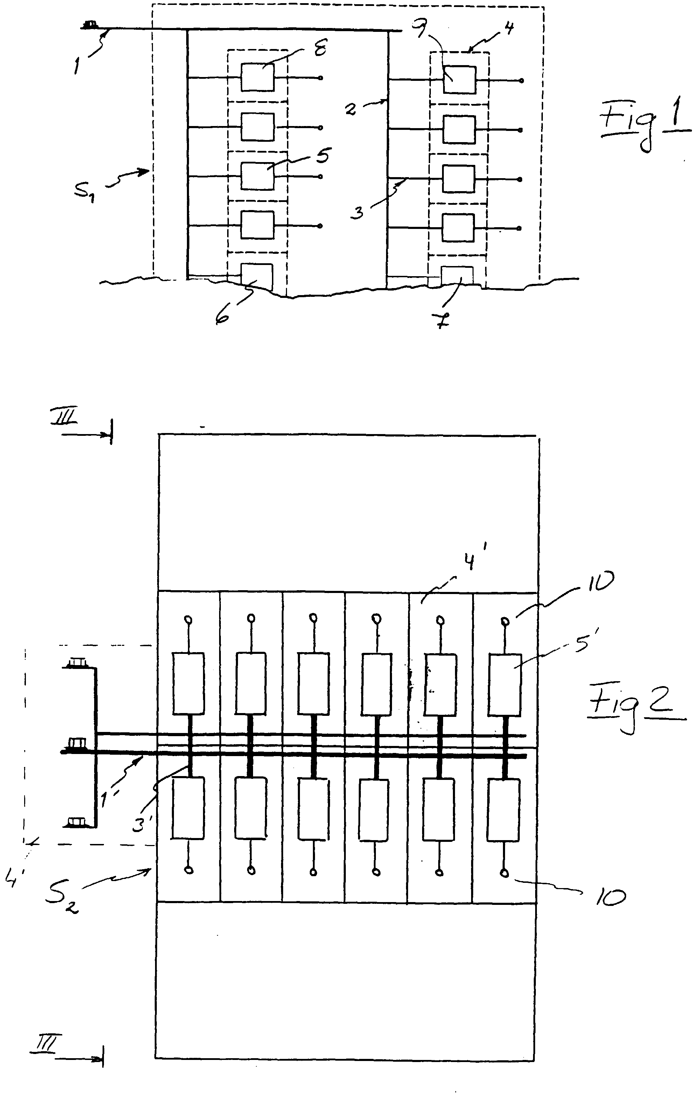

The invention shall be described further below by means of an embodiment used today and partially and schematically shown in Fig. 1 and under reference to embodiments shown in the other figures, where:
Fig. 2 schematically shows how a cubicle connection according to the invention is constructed,
Fig. 3 schematically shows the cubicle connection according to Fig. 2 as seen from III-III in Fig. 2, and
Fig. 4 shows an alternative embodiment of the cubicle connection according to Figs. 2 and 3.

A cubicle connecting equipment, in many cases consisting of several separate cubicles of the kind that the invention relates to, is commonly fed with electric current from heavily dimensioned main bus-bars of thick copper material, which in turn are connected to thick cables, that are drawn in the ceilings or along the floor in spaces intended for the purpose.

It appears from Fig. 1 how the connecting principle so far generally has been. A cubicle connection S₁ is fed from a main bus-bar 1, which penetrates a part of the cubicle, in the present case its upper part, via an insulated opening (not shown). The main bus-bar 1 is thereafter divided into branch bus-bars 2, which via connectors 3 connect the bus-bar systems 1, 2 with functional units or fuse units 5-9 for the necessary number of phases each, the units being contained in security cells 4. At such modular construction heat generated for example at the units 6 and 7 will effect the units 8 and 9. The effect is increased in that the cubicle is closed at operation. As the units herewith is exposed to a temperature rise, which partly depends on their own heating, partly on heat conducting/transmission, the problem occurs that the compulsory thermal protection devices of the cells can release in spite of the fact that a lower current than the rated one has been fed into the released unit or units.

Fig. 2 schematically shows an embodiment according to the invention of a cubicle connection S₂. Bus-bars 1' are here enclosed in a security cell 4' behind those security cells which contain the functional units but are here for the sake of clarity shown folded out at the side of the cells 4'. The respective bus-bar 1' does here function both as the main bus-bar and a branch bus-bar corresponding to the bar 2 in Fig. 1. In a known way said bar penetrates the cubicle wall via an insulated opening (not shown). By the double function of the bar 1' a non-negligible amount of copper metal can be saved at the manufacture of a cubicle connection. From the bar 1' connectors 3' lead further in to functional units 5' contained in security ceils 4'. Under the condition that the respective functional unit 5', having either conventional fuses or thermal protective elements of the type MCCB, is not released, current can be supplied via terminals 10 to a not specified final user, for example a group of machines in an industry or a group of flats at a staircase in a high building. By arranging the security cells in the way according to the invention the addition influence of the non-avoidable heating appearing in single cells ceases in an effective way.

The cubicle connection S₂ appears in Fig. 3 in a view along the line III-III in Fig. 2. In this figure it appears how the bus-bars 1' are oriented for enabling connection of all three phases in each functional unit 5'. It also appears how supply in and out, respectively, of current can occur either "upwards" or "downwards", cables necessary for this purpose being attached at special attachment devices 11, 12 for cables to be connected to an "upper" functional unit 5' and 13, 14 for cables to be connected to a "lower" functional unit 5'.

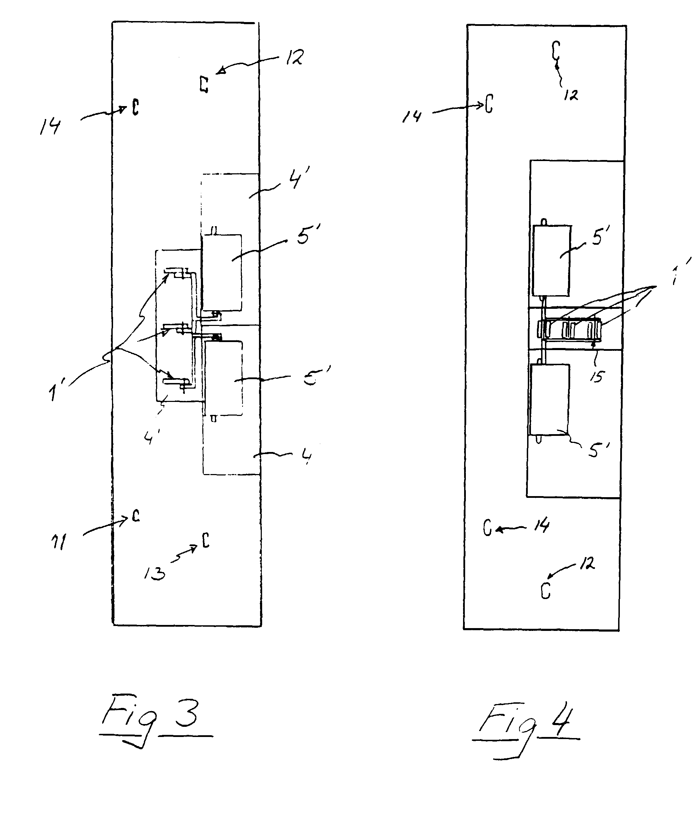

In Fig. 4 is shown as an alternative embodiment a cubicle connection S₂, where the bus-bars 1' are arranged along the front side of the cubicle with one row of functional units 5' at the under side and one row at the upper side. This alternative gives the advantage that heat conducting through the material between the different security cells 4' becomes more difficult, at the same time as the accessibility to the screw connections 15 which connect different bus-bars with each other becomes very good for repeated controls and possible adjustment.

The invention shall not in any way be limited by the description above but is only limited by the claims.

## Claims

1. A device (S₂) at an encased connecting equipment, which is intended for power current and is to be placed on a floor and at which current is taken from an electricity network via functional units (5') from heavily dimensioned bus-bars (1'), preferably of copper, **characterized** in that the functional units (5') are arranged in one or at the most two horizontal rows in a cubicle belonging to a cubicle connecting equipment.

2. A device according to claim 1, **characterized** in that the supply current to the device is supplied either from the upper side or the lower side of bus-bars (1') common for all functional units (5').

3. A device according to claim 1, **characterized** in that an output from the cubicle connecting equipment can occur either upwards or downwards (Fig. 3).

4. A device according to any of the preceding claims, **characterized** in that the bus-bars (1') are arranged between the functional units (5') at generally the same depth in the cubicle as the prespective functional units and in that herewith also the rows of functional units belonging to the cubicle connection are roomly separated.

5. A device according to any of the preceding claims, **characterized** in that the bus-bars (1') are arranged behind the functional units (5').
